# EUROPÄISCHE PATENTSCHRIFT

(11) **EP 4 200 551 B1**
(45) Veröffentlichungstag und Bekanntmachung des Hinweises auf die Patenterteilung: **16.10.2024**
(21) Anmeldenummer: 21758667.6
(22) Anmeldetag: 10.08.2021
(51) Int. Cl.: F16L 5/04, A62C 2/06, A62C 3/16

(54) **VERFAHREN ZUR HERSTELLUNG EINES BRANDSCHOTTS**
METHOD FOR MANUFACTURING A FIRE BULKHEAD
PROCÉDÉ DE FABRICATION D'UNE CLOISON PARE-FEU

(30) Priorität: 24.08.2020 EP 20192423
(43) Veröffentlichungstag der Anmeldung: 28.06.2023
(73) Patentinhaber: Hilti Aktiengesellschaft, 9494 Schaan (LI)
(72) Erfinder: SCHWABBAUER, Laura, 80636 München (DE); WALDNER, Alexander, 87665 Mauerstetten (DE); AUBAUER, Christoph, 88142 Wasserburg (DE); BLEICHER, Christian, 86938 Schondorf am Ammersee (DE); FÖRG, Christian, 86807 Buchloe (DE); PAETOW, Mario, 86899 Landsberg am Lech (DE)
(74) Vertreter: Hilti Aktiengesellschaft Corporate Intellectual Property
(86) Internationale Anmeldenummer: PCT/EP2021/072250
(87) Internationale Veröffentlichungsnummer: WO 2022/043049

(56) Entgegenhaltungen:
- EP-A1- 3 517 815
- US-A1- 2006 006 611
- US-A1- 2018 306 352

## Beschreibung

Die Erfindung betrifft ein Verfahren zur Herstellung eines Brandschotts in einem Durchbruch eines Bauwerks.

Derartige Brandschotts dienen dazu, den Durchbruch, der Abschnitte des Bauwerks verbindet, brandschutztechnisch abzudichten. Auf diese Weise wird insbesondere das Durchtreten von Rauch und/oder Flammen durch den Durchbruch verhindert. Die beiden Abschnitte des Bauwerks werden also in dieser Hinsicht voneinander isoliert.

Dabei ist es bekannt, block- oder kissenförmige Materialien im abzudichtenden Durchbruch anzuordnen. Solche Materialien und daraus hergestellte Brandschutzelemente sind beispielsweise aus der EP 3 517 815 A1, DE 43 25 966 A1, der WO 99/38932 A1 und der WO 2005/003254 A1 bekannt. Dabei ist es üblich, die Brandschutzelemente beispielsweise durch Zuschneiden geometrisch an den zugehörigen Durchbruch anzupassen.

Das Brandschott muss dicht an den Grenzflächen des Durchbruchs anliegen, um eine hohe Dichtwirkung zu erzielen. Diese Anforderung steht jedoch im Konflikt mit einer leichtgängigen Installation der das Brandschott bildenden Brandschutzelemente, also einer leichten Herstellbarkeit des Brandschotts.

Die Aufgabe der vorliegenden Erfindung besteht somit darin, ein Verfahren zur Herstellung eines Brandschotts anzugeben, das diesen Zielkonflikt auflöst oder zumindest abmildert. Es sollen also die das Brandschott bildenden Brandschutzelemente leicht im abzudichtenden Durchbruch angeordnet werden können. Gleichzeitig sollen sie den Durchbruch im brandschutztechnischen Sinne zuverlässig abdichten.

Die Aufgabe wird durch ein Verfahren nach Anspruch 1 zur Herstellung eines Brandschotts in einem Durchbruch eines Bauwerks gelöst, wobei zumindest ein Brandschutzprofil verwendet wird, das einen Schlauch aus einem Verbundmaterial umfasst, der mit einem Brandschutzmaterial gefüllt ist, wobei das Verbundmaterial ein anorganisches Fasermaterial aufweist, das mit einer Folie verbunden ist, und wobei das Brandschutzprofil derart ausgebildet ist, dass es im Brandfall mit einem benachbarten Brandschutzprofil verbacken kann. Das Verfahren umfasst die folgenden Schritte:
a) Überführen des Brandschutzprofils in einen zumindest abschnittsweise komprimierten Zustand oder Bereitstellen des Brandschutzprofils in einem zumindest abschnittsweise komprimierten Zustand,
b) Einbringen des Brandschutzprofils in den Durchbruch, wobei der zumindest abschnittsweise komprimierte Zustand beibehalten wird, und
c) anschließendes Freigeben des Brandschutzprofils, sodass es zumindest teilweise und zumindest abschnittsweise dekomprimiert wird.

Das Brandschutzprofil ist also elastisch verformbar. Das bedeutet, dass insbesondere auch das Brandschutzmaterial elastisch verformbar sein muss. Im komprimierten Zustand ist das Brandschutzprofil zumindest in einer seiner Dimensionen etwas kleiner als der mittels des Brandschutzprofils brandschutztechnisch abzudichtende Abschnitt des Durchbruchs. Dadurch lässt sich das Brandschutzprofil leicht an der entsprechenden Stelle im Durchbruch anordnen. In diesem Zusammenhang betrifft ein abschnittsweise komprimierter Zustand einen Zustand, in dem das Brandschutzprofil lediglich in einem Abschnitt, also lokal, komprimiert ist. Weitere Abschnitte des Brandschutzprofils können unkomprimiert sein. Davon zu unterscheiden ist die Stärke oder der Grad der Komprimierung. In diesem Aspekt kann eine teilweise, unvollständige Komprimierung ausreichend sein, um den genannten Effekt zu erzielen. Durch die Freigabe und anschließende Dekomprimierung legt sich das Brandschutzprofil zuverlässig an Grenzflächen des Durchbruchs und/oder benachbarte Brandschutzprofile an. Somit ergibt sich eine zuverlässige Brandschutzwirkung.

Ein Brandschutzprofil, das einen Schlauch aus einem Verbundmaterial umfasst, der mit einem Brandschutzmaterial gefüllt ist, wobei das Verbundmaterial ein anorganisches Fasermaterial aufweist, das mit einer Folie verbunden ist, eignet sich besonders gut für ein erfindungsgemäßes Verfahren, da es leicht komprimiert werden kann. Durch den Schlauch aus Verbundmaterial kann es zudem in einer definierten Weise komprimiert werden. Es behält also auch in seinem komprimierten Zustand seine Gestalt im Wesentlichen bei. Mit anderen Worten verformt sich ein solches Brandschutzprofil nicht in unerwünschter und/oder unvorhersehbarer Weise. In einer alternativen Ausführungsform ist es auch möglich, dass das Fasermaterial neben der Folie vorliegt, oder auch über dem Brandschutzmaterial mit der Folie fixiert wird.

Dadurch, dass das Brandschutzprofil dazu ausgebildet ist, im Brandfall mit einem benachbarten Brandschutzprofil zu verbacken, wird ein Brandschott geschaffen, das besonders dicht ist.

Bevorzugt umfasst das Brandschutzmaterial des Brandschutzprofils ein intumeszierendes Material. Ein solches Material nimmt unter der Einwirkung von Hitze in seinem Volumen zu. Dadurch ergibt sich eine weiter verbesserte brandschutztechnische Abdichtung des Durchbruchs.

Gemäß einer Ausführungsform ist das anorganische Fasermaterial ein Gewebe, ein Gestrick oder ein Vliesstoff. Das Brandschutzprofil wird daher sowohl im komprimierten Zustand als auch im unkomprimierten Zustand in einer vorgegebenen Form gehalten.

Vorteilhafterweise umfasst das Fasermaterial Glasfasern, Basaltfasern oder Keramikfasern. Derartige Fasern weisen für den vorliegenden Anwendungsfall eine ausreichende Festigkeit auf. Zudem sind sie im Wesentlichen feuerbeständig.

Unter den Fasern des Fasermaterials können auch brennbare Fasern sein. Dabei geben die brennbaren Fasern im Brandfall Wege frei, über die sich das Brandschutzmaterial ausdehnen kann und über die benachbarte Brandschutzprofile miteinander verbacken können. Die nicht brennbaren Fasern sorgen währenddessen für eine gewünschte Formstabilität des Brandschutzprofils.

In diesem Zusammenhang hat das Brandschutzprofil beispielsweise einen rechteckigen Querschnitt.

Im Fasermaterial kann außerdem eine Vielzahl von Löchern vorgesehen sein. Das Brandschutzmaterial, insbesondere wenn es sich dabei um ein intumeszierendes Material handelt, kann somit im Brandfall durch diese Löcher austreten und für eine zuverlässige Abdichtung des Durchbruchs sorgen. Ferner kann das Verbacken durch diese Löcher hindurch stattfinden.

Für den Fall, dass ein Brandschott in einem vergleichsweise schmalen Spalt hergestellt werden soll, kann das Brandschutzprofil als Profilstreifen vorgesehen werden, der in den schmalen Spalt eingeschoben wird. Derartige Brandschotts sind zum Beispiel zur brandschutztechnischen Abdichtung der Ränder von Brandschutzklappenbaugruppen gut geeignet.

Erfindungsgemäß wird das Brandschutzprofil in einem zumindest abschnittsweise komprimierten Zustand bereitgestellt, indem das Brandschutzprofil unter Luftabschluss im Inneren einer Vakuumhülle bereitgestellt wird. Derartige Brandschutzprofile können gegenüber ihrem unkomprimierten Zustand in einer ihrer Dimensionen um 30 % bis 70 %, also z. B. um 40 %, verkleinert sein. Dadurch lassen sie sich besonders einfach in den Durchbruch einbringen. Zudem muss beim Einbringen des Brandschutzprofils nicht darauf geachtet werden, den komprimierten Zustand beizubehalten.

In diesem Zusammenhang wird das Brandschutzprofil freigegeben, indem in der Vakuumhülle ein Lufteinlass geöffnet oder geschaffen wird. Es wird also eine Möglichkeit geschaffen, dass Umgebungsluft ins Innere der Vakuumhülle strömt. Dadurch wird das Brandschutzprofil zumindest teilweise dekomprimiert. Der Lufteinlass ist dabei vorteilhafterweise so angeordnet, dass er im verbauten Zustand des zugeordneten Brandschutzprofils leicht zugänglich ist. Dabei ist es auch möglich, dass an der Vakuumhülle kein definierter Lufteinlass vorgesehen ist, sondern ein solcher Lufteinlass beispielsweise mittels eines Werkzeugs geschaffen wird, indem die Vakuumhülle lokal geöffnet, beispielsweise durchstochen, wird.

Es können auch zur Herstellung des Brandschotts zumindest zwei Brandschutzprofile verwendet werden, wobei sich die Brandschutzprofile in ihrer Länge, ihrer Höhe und/oder in ihrer Breite unterscheiden. Dadurch lässt sich das Brandschott einfach und zuverlässig an eine gegebene Geometrie des Durchbruchs anpassen. Selbstverständlich können auch mehr als zwei Brandschutzprofile verwendet werden. Unterschiedlich dimensionierte Brandschutzprofile können darüber hinaus dafür genutzt werden, unterschiedliche Feuerwiderstandsdauern zu schaffen.

Der Durchbruch kann von zumindest einer Leitung durchgriffen sein. Dann kann in einem die Leitung umgebenden Bereich ein Brandschutzprofil mit einer größeren Breite verwendet werden als in übrigen Bereichen des Durchbruchs. Durch die größere Breite ergibt sich um die Leitung herum eine vergrößerte Einbautiefe des Brandschutzprofils. Dadurch steigt die Feuerwiderstandsdauer.

In einer Alternative wird das Brandschutzprofil in den zumindest abschnittsweise komprimierten Zustand überführt, indem es aufgerollt wird. Diese Art, das Brandschutzprofil zu komprimieren, ist besonders leicht umsetzbar. Das gilt insbesondere für Baustellenumgebungen. Der komprimierte Zustand wird beibehalten, indem das Brandschutzprofil manuell im gerollten Zustand gehalten wird. Auch ist es denkbar, diesen Zustand mittels eines Bandes zu halten, das um das gerollte Brandschutzprofil gebunden wird. Das Brandschutzprofil wird dann im aufgerollten Zustand in den Durchbruch eingesetzt. Sobald das Brandschutzprofil nicht mehr manuell oder vom Band gehalten wird, wird es zumindest teilweise dekomprimiert.

Darüber hinaus wird durch die geringe Reibung der Folien aneinander, ein Aufwinden des durch Aufrollen komprimierten Schlauches erst ermöglicht wird. Im Allgemeinen ist dies durch Reibung des komprimierten Materials aneinander sonst nicht möglich. Dieser Aufbau ermöglicht auch temporäre Fixier-Möglichkeiten zum leichteren Einbau.

Zumindest eine den Durchbruch durchgreifende Leitung kann installiert werden, indem sie zwischen zwei benachbarte Schichten des Brandschutzprofils oder zwei benachbarte Brandschutzprofile geschoben wird. Das ist insbesondere bei einem gerollten Brandschutzprofil besonders einfach. Gleichzeitig ergibt sich eine gute brandschutztechnische Abdichtung im Umfeld der Leitung.

Auch ist es möglich, dass eine Leitung, die in ihrem installierten Zustand den Durchbruch durchgreift, mittels des Brandschutzprofils umwickelt wird. Insbesondere wird die Leitung mittels des Brandschutzprofils umwickelt, bevor sie den Durchbruch durchgreift. Mit anderen Worten wird das Brandschutzprofil auf die Leitung aufgerollt oder aufgewickelt. Die Leitung stellt dabei einen Wickelkern dar. In diesem Zusammenhang spricht man auch von einer Bandage für die Leitung. Danach wird der Verbund aus Leitung und Brandschutzprofil in den Durchbruch eingesetzt.

Bevorzugt wird das Brandschutzprofil infolge der Freigabe nur unvollständig dekomprimiert, sodass es im verbauten Zustand eine Ausdehnungsbewegung des Durchbruchs durch eine weitere Dekomprimierung kompensieren kann. Die elastische Verformbarkeit des Brandschutzprofils bleibt also im Wesentlichen über die gesamte Lebensdauer des Brandschotts erhalten. Das Brandschott bietet somit auch dann eine zuverlässige brandschutztechnische Abdichtung, wenn sich der Durchbruch aufgrund von Bewegungen innerhalb des Bauwerks vergrößert. Es ist dadurch besonders zuverlässig.

Die Erfindung wird nachstehend anhand verschiedener Ausführungsbeispiele erläutert, die in den beigefügten Zeichnungen gezeigt sind. Es zeigen:
- Figur 1 ein Brandschutzprofil zur Verwendung in einem erfindungsgemäßen Verfahren zur Herstellung eines Brandschotts in einem unkomprimierten Zustand,
- Figur 2 das Brandschutzprofil aus Figur 1 in einem komprimierten Zustand,
- Figur 3 ein Brandschott, das mittels eines erfindungsgemäßen Verfahrens unter Nutzung des Brandschutzprofils aus den Figuren 1 und 2 hergestellt wurde,
- Figur 4 ein alternatives Brandschott, das ebenfalls mittels eines erfindungsgemäßen Verfahrens und unter Nutzung von Brandschutzprofilen gemäß Figuren 1 und 2 hergestellt wurde,
- Figur 5 eine Baugruppe aus einem Brandschutzprofil und einer Leitung, wobei das Brandschutzprofil zur Bildung eines Brandschotts um die Leitung gewickelt ist,
- Figur 6 eine Baugruppe aus einem Brandschutzprofil und einem Leitungsbündel, wobei das Brandschutzprofil zur Bildung eines Brandschotts um das Leitungsbündel gewickelt ist,
- Figur 7 ein Brandschott gemäß einer weiteren Ausführungsform,
- Figur 8 ein Brandschott gemäß noch einer Ausführungsform, das mittels eines erfindungsgemäßen Verfahrens unter Nutzung mehrerer Brandschutzprofile gemäß Figuren 1 und 2 hergestellt wurde.

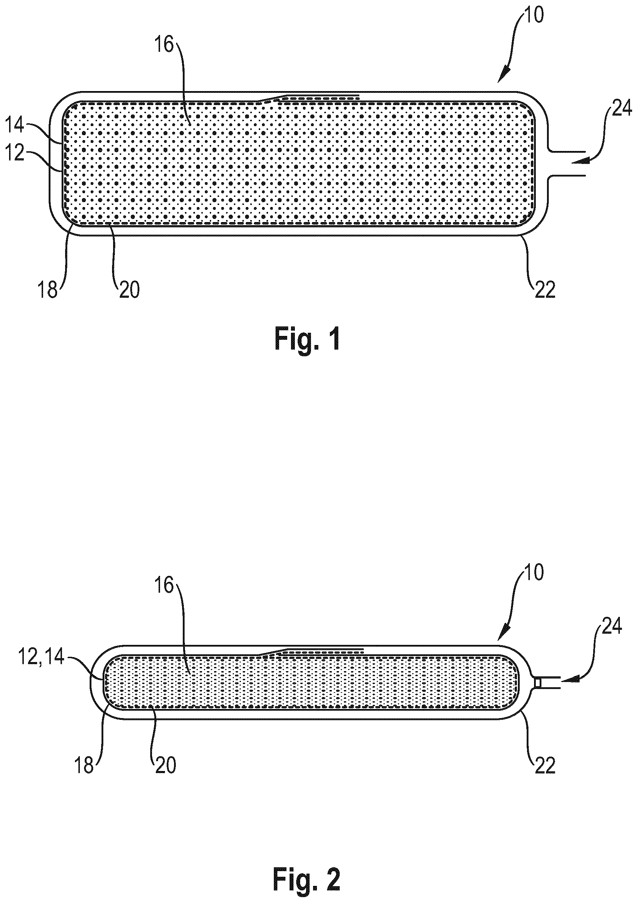

Figur 1 und Figur 2 zeigen schematisch ein Brandschutzprofil 10, das in einem Verfahren zur Herstellung eines Brandschotts in einem Durchbruch eines Bauwerks verwendet werden kann.

Das Brandschutzprofil 10 weist einen Schlauch 12 aus einem Verbundmaterial 14 auf, der mit einem Brandschutzmaterial 16 gefüllt ist.

Das Brandschutzmaterial 16 ist ein intumeszierendes Material, das in Form eines elastisch verformbaren Schaums vorliegt.

Das Verbundmaterial 14 setzt sich zusammen aus einer Folie 18 und einem anorganischen Fasermaterial 20. In den Figuren 1 und 2 ist die Folie 18 durch eine durchgehende Linie und das Fasermaterial 20 durch eine gestrichelte Linie dargestellt.

Das Fasermaterial 20 kann ein Gewebe, ein Gestrick oder ein Vliesstoff sein, insbesondere aus Glasfasern, Basaltfasern oder Keramikfasern.

Wenn eine bestimmte Temperatur überschritten wird, beispielsweise im Brandfall, dehnt sich das Brandschutzmaterial 16 aus und kann durch das Verbundmaterial 14 hindurch aus dem Schlauch 12 austreten.

Werden innerhalb eines Brandschotts mehrere Brandschutzprofile 10 verwendet, können die aneinander angrenzenden Brandschutzprofile 10 miteinander verbacken. Dadurch wird ein besonders zuverlässiger Brandschutz erreicht.

Das Brandschutzprofil 10 ist innerhalb einer Vakuumhülle 22 angeordnet.

Dabei ist im in Figur 1 dargestellten, unkomprimierten Zustand des Brandschutzprofils 10 ein Lufteinlass 24 der Vakuumhülle 22 geöffnet.

Die Figur 2 zeigt das Brandschutzprofil 10 in einem komprimierten Zustand. Dabei wurde ausgehend vom unkomprimierten Zustand Luft aus dem Inneren der Vakuumhülle 22 gesaugt. Als Folge hiervon wurde das Brandschutzprofil 10 in einer in den Figuren 1 und 2 vertikal verlaufenden Richtung komprimiert, d.h. in seiner Höhe verkleinert.

Das Brandschutzprofil 10 ist im komprimierten Zustand unter Luftabschluss im Inneren der Vakuumhülle 22 gehalten. Dafür ist der Lufteinlass 24 verschlossen.

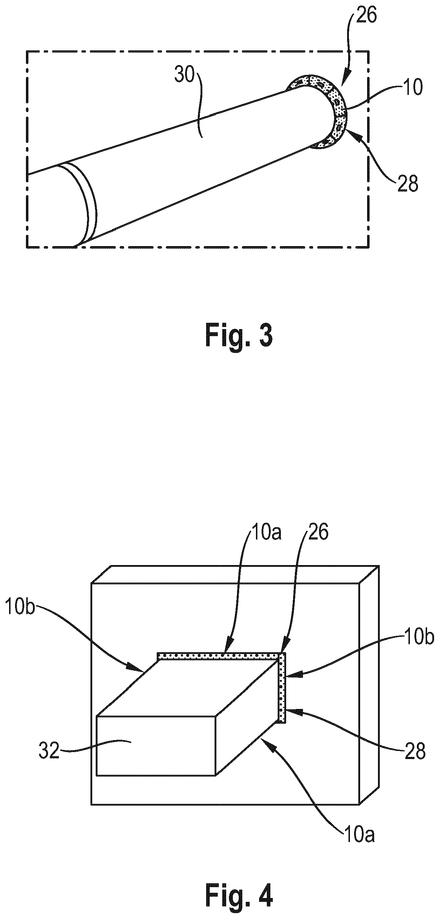

Figur 3 zeigt ein Brandschott 26, das in einem Durchbruch 28 eines Bauwerks vorgesehen ist.

Der Durchbruch 28 ist zudem von einer Leitung 30 in Form eines Rohres durchgriffen.

Das Brandschott 26 wird unter Nutzung des Brandschutzprofils 10 folgendermaßen hergestellt.

Zunächst wird das Brandschutzprofil 10 in seinem komprimierten Zustand bereitgestellt (siehe Figur 2).

Dann wird das Brandschutzprofil 10 in den ringförmigen Schlitz eingebracht, der um die Leitung 30 herum verläuft. Dabei wird der komprimierte Zustand beibehalten.

Danach wird das Brandschutzprofil 10 dahingehend freigegeben, dass es dekomprimiert wird. Dafür wird der Lufteinlass 24 geöffnet.

Dadurch nimmt das Brandschutzprofil 10 einen teilweise komprimierten Zustand ein, in dem es sowohl an der Leitung 30 als auch an einer Außenkontur des Durchbruchs 28 anliegt.

Für den Fall, dass über die Lebensdauer des Brandschotts 26 Relativbewegungen zwischen der Leitung 30 und dem Durchbruch 28 auftreten, können diese durch ein weiteres Dekomprimieren des Brandschutzprofil 10 kompensiert werden.

Ein alternatives Brandschott 26 ist in Figur 4 zu sehen.

Dabei ist ein Querschnitt des Durchbruchs 28 im Unterschied zur Figur 3 im Wesentlichen rechteckig. Er wird von einer ebenfalls im Querschnitt im Wesentlichen rechteckigen Leitung 32 in Form eines Lüftungskanals durchsetzt.

Das Brandschott 26 ist nun aus insgesamt vier Brandschutzprofilen 10 aufgebaut.

Dabei werden die an einer Oberseite und an einer Unterseite der Leitung 32 durch die Leitung 32 und den Durchbruch 28 gebildeten Schlitze jeweils mit einem Brandschutzprofil 10 einer ersten Länge ausgefüllt. Diese Brandschutzprofile 10 sind in Figur 4 mit 10a bezeichnet.

Die jeweils seitlich an der Leitung 32 verlaufenden Schlitze sind jeweils mit einem Brandschutzprofil 10 einer zweiten Länge ausgefüllt. Die zweite Länge ist dabei kleiner als die erste Länge. Diese Brandschutzprofile 10 sind in Figur 4 mit 10b bezeichnet.

Das Einbringen der Brandschutzprofile 10a, 10b in die zugeordneten Abschnitte des Durchbruchs 28, d.h. in die Schlitze, erfolgt dabei wie bereits im Zusammenhang mit der Figur 3 erläutert. Auf die obigen Ausführungen wird daher verwiesen.

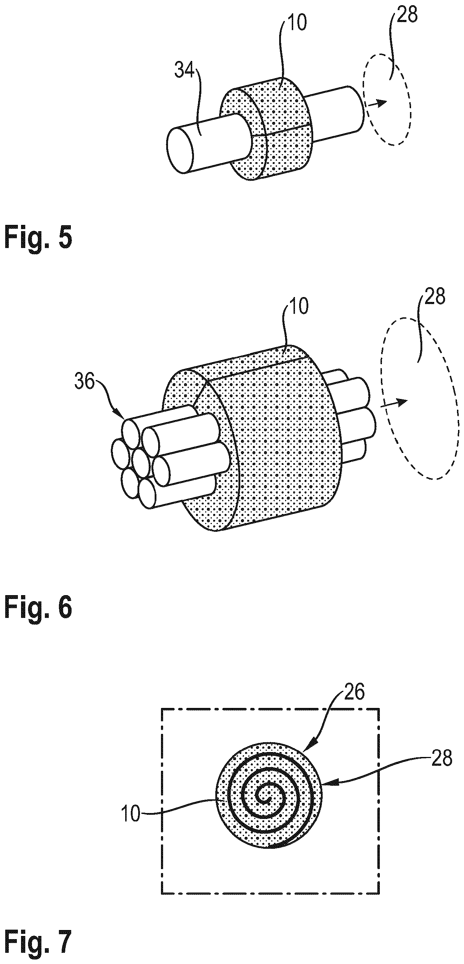

Alternativ zu den in den Figuren 3 und 4 dargestellten Varianten kann das Brandschott 26 auch hergestellt werden, indem eine Leitung 34 oder ein Leitungsbündel 36 von einem Brandschutzprofil 10 umwickelt wird (siehe Figuren 5 und 6).

Dabei kann alternativ zum Brandschutzprofil 10 aus den Figuren 1 und 2 auch ein Brandschutzprofil 10 verwendet werden, das keine Vakuumhülle 22 aufweist. aufweist, was jedoch nicht unter dem Schutzumfang der Ansprüche fällt.

Ein solches Brandschutzprofil 10 wird dann dadurch komprimiert, dass es unter Spannung um die Leitung 34 bzw. das Leitungsbündel 36 gewickelt wird.

Im Folgenden wird die Leitung 34 zusammen mit dem Brandschutzprofil 10 bzw. das Leitungsbündel 36 zusammen mit dem Brandschutzprofil 10 in den zugeordneten Durchbruch 28 geschoben (siehe Pfeile in Figuren 5 und 6).

Dort wird der komprimierte Zustand des jeweiligen Brandschutzprofils 10 entweder freigegeben, indem der Lufteinlass 24 in der Vakuumhülle 22 geöffnet wird oder indem die beim Umwickeln in das Brandschutzprofil 10 eingebrachte Spannung derart entfernt wird, dass es sich zumindest teilweise von der Leitung 34 bzw. dem Leitungsbündel 36 abwickeln kann.

Die Figur 7 zeigt noch ein alternatives Brandschott 26, das in einem Durchbruch 28 mit einem im Wesentlichen kreisförmigen Querschnitt vorgesehen ist.

Um dieses Brandschott 26 herzustellen, wird ein Brandschutzprofil 10, das im Unterschied zum in den Figuren 1 und 2 dargestellten Brandschutzprofil 10 ohne Vakuumhülle 22 ausgeführt ist, zunächst aufgerollt und dabei komprimiert, was jedoch ebenfalls nicht unter dem Schutzumfang der Ansprüche fällt.

Darauf folgend wird es im aufgerollten Zustand in den Durchbruch 28 eingeschoben und dort so freigegeben, dass es sich zumindest abschnittsweise wieder abrollen kann.

Optional können danach zwischen den Schichten des Brandschutzprofils 10 eine oder mehrere Leitungen (nicht dargestellt in Figur 7) durch den Durchbruch 28 geschoben werden.

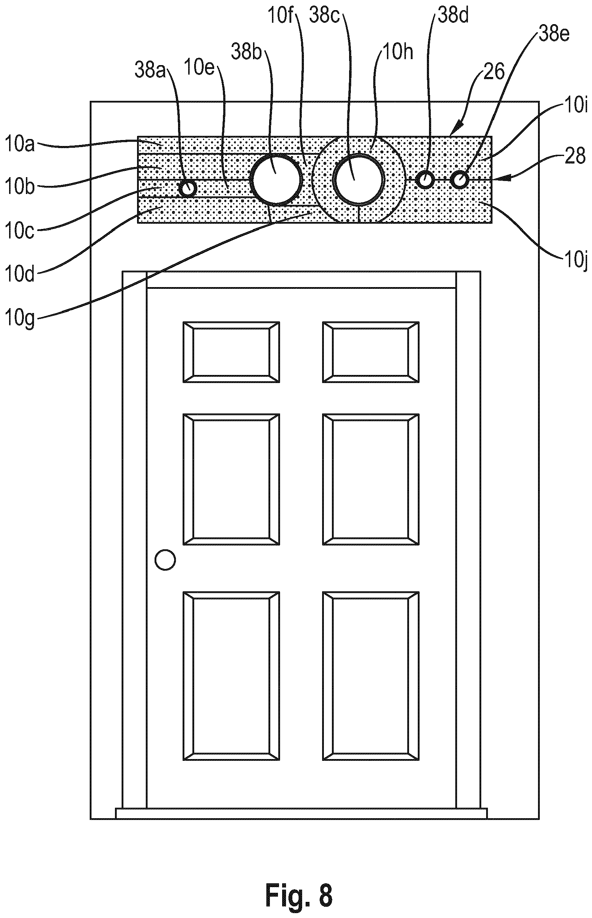

Ein weiteres Brandschott 26 ist in Figur 8 gezeigt. Dieses ist in einem Durchbruch 28 angeordnet, der in einem Wandabschnitt oberhalb einer Türe eines Bauwerks vorgesehen ist. Ein solcher Durchbruch 28 dient dazu, Versorgungsleitungen in Form von Kabeln und Rohren zu einzelnen Haushalten oder Gebäudeabschnitten zu verlegen. Dieser Anwendungsfall wird häufig auch mit Letterbox-Durchbruch oder schlicht Letterbox bezeichnet.

Der Durchbruch 28 ist in der dargestellten Ausführungsform von insgesamt fünf Leitungen 38a bis 38e durchgriffen.

Das Brandschott 26 ist aus zehn Brandschutzprofilen 10a bis 10j aufgebaut. Diese unterscheiden sich in ihrer Länge und in ihrer Höhe.

Zudem ist das die Leitung 38c umgebende Brandschutzprofil 10h tiefer als die übrigen Brandschutzprofile 10a bis 10g, 10i, 10j, sodass sich im die Leitung 38c umgebenden Bereich eine vergrößerte Feuerwiderstandsdauer ergibt.

Jedes der Brandschutzprofile 10a bis 10j wird entsprechend der Erläuterungen zur Figur 3 in seinem komprimierten Zustand in den Durchbruch 28 eingesetzt und dann dahingehend freigegeben, dass es dekomprimiert wird.

Dabei sind alle Brandschutzprofile 10a bis 10j infolge der Freigabe nur unvollständig dekomprimiert.

Somit können eventuell auftretende Ausdehnungsbewegungen des Durchbruchs 28, die aus Bewegungen angrenzender Elemente des Bauwerks resultieren, durch eine weitere Dekomprimierung eines oder mehrerer der Brandschutzprofile 10a bis 10j kompensiert werden.

Das ist insbesondere dann von praktischer Bedeutung, wenn der Durchbruch 28 sich bis zu einer Decke des Bauwerks erstreckt. Dann kann das Brandschott 26 Relativbewegungen zwischen der Wand, in der der Durchbruch 28 vorgesehen ist, und der angrenzenden Decke kompensieren.

In gleicher Weise kann das Brandschott 26 aus der Figur 8 auch in einer sogenannten Head-of-Wall-Fuge verwendet werden, also in einer Fuge, die zwischen einem oberen Ende einer Wand und einer angrenzenden Decke vorliegt.

## Patentansprüche

1. Verfahren zur Herstellung eines Brandschotts (26) in einem Durchbruch (28) eines Bauwerks, wobei zumindest ein Brandschutzprofil (10a bis 10j) verwendet wird, das einen Schlauch (12) aus einem Verbundmaterial (14) umfasst, der mit einem Brandschutzmaterial (16) gefüllt ist, wobei das Verbundmaterial (14) ein anorganisches Fasermaterial (20) aufweist, das mit einer Folie (18) verbunden ist, und wobei das Brandschutzprofil (10a bis 10j) derart ausgebildet ist, dass es im Brandfall mit einem benachbarten Brandschutzprofil (10a bis 10j) verbacken kann, umfassend die folgenden Schritte:
a) Überführen des Brandschutzprofils (10a bis 10j) in einen zumindest abschnittsweise komprimierten Zustand oder Bereitstellen des Brandschutzprofils (10a bis 10j) in einem zumindest abschnittsweise komprimierten Zustand,
b) Einbringen des Brandschutzprofils (10a bis 10j) in den Durchbruch (28), wobei der zumindest abschnittsweise komprimierte Zustand beibehalten wird, und
c) anschließendes Freigeben des Brandschutzprofils (10a bis 10j), sodass es zumindest teilweise und zumindest abschnittsweise dekomprimiert wird,
**dadurch gekennzeichnet, dass** das Brandschutzprofil (10a bis 10j) in einem zumindest abschnittsweise komprimierten Zustand bereitgestellt wird, indem das Brandschutzprofil (10a bis 10j) unter Luftabschluss im Inneren einer Vakuumhülle (22) bereitgestellt wird.

2. Verfahren nach Anspruch 1, **dadurch gekennzeichnet, dass** das Brandschutzprofil (10a bis 10j) freigegeben wird, indem in der Vakuumhülle (22) ein Lufteinlass (24) geöffnet oder geschaffen wird.

3. Verfahren nach einem der vorhergehenden Ansprüche, **dadurch gekennzeichnet, dass** zumindest zwei Brandschutzprofile (10a bis 10j) verwendet werden, wobei sich die Brandschutzprofile (10a bis 10j) in ihrer Länge, ihrer Höhe und/oder in ihrer Breite unterscheiden.

4. Verfahren nach Anspruch 3, **dadurch gekennzeichnet, dass** der Durchbruch (28) von zumindest einer Leitung (30, 32, 34, 38a bis 38e) durchgriffen wird und in einem die Leitung (30, 32, 34, 38a bis 38e) umgebenden Bereich ein Brandschutzprofil (10a bis 10j) mit einer größeren Breite verwendet wird als in übrigen Bereichen des Durchbruchs (28).

5. Verfahren nach einem der vorhergehenden Ansprüche, **dadurch gekennzeichnet, dass** das Brandschutzprofil (10a bis 10j) in den zumindest abschnittsweise komprimierten Zustand überführt wird, indem es aufgerollt wird.

6. Verfahren nach einem der vorhergehenden Ansprüche, **dadurch gekennzeichnet, dass** zumindest eine den Durchbruch (28) durchgreifende Leitung (30, 32, 34, 38a bis 38e) installiert wird, indem sie zwischen zwei benachbarte Schichten des Brandschutzprofils (10a bis 10j) oder zwei benachbarte Brandschutzprofile (10a bis 10j) geschoben wird.

7. Verfahren nach einem der vorhergehenden Ansprüche, **dadurch gekennzeichnet, dass** eine Leitung (30, 32, 34, 38a bis 38e), die in ihrem installierten Zustand den Durchbruch (28) durchgreift, mittels des Brandschutzprofils (10a bis 10j) umwickelt wird, insbesondere wobei die Leitung (30, 32, 34, 38a bis 38e) mittels des Brandschutzprofils (10a bis 10j) umwickelt wird, bevor sie den Durchbruch (28) durchgreift.

8. Verfahren nach einem der vorhergehenden Ansprüche, **dadurch gekennzeichnet, dass** das Brandschutzprofil (10a bis 10j) infolge der Freigabe nur unvollständig dekomprimiert wird, sodass es im verbauten Zustand eine Ausdehnungsbewegung des Durchbruchs (28) durch eine weitere Dekomprimierung kompensieren kann.

## Claims

1. Method for producing a fire barrier (26) in an opening (28) of a building, at least one fire protection profile (10a to 10j) being used which comprises a tube (12) made of a composite material (14), which is filled with a fire protection material (16), the composite material (14) comprising an inorganic fiber material (20) which is connected to a film (18), and the fire protection profile (10a to 10j) being designed such that it can bake together with an adjacent fire protection profile (10a to 10j) in the event of a fire, comprising the following steps:
a) transferring the fire protection profile (10a to 10j) into an at least partially compressed state or providing the fire protection profile (10a to 10j) in an at least partially compressed state,
b) introducing the fire protection profile (10a to 10j) into the opening (28), wherein the at least partially compressed state is maintained, and
c) subsequently releasing the fire protection profile (10a to 10j) so that it is decompressed at least partially and at least in portions,
**characterized in that** the fire protection profile (10a to 10j) is provided in an at least partially compressed state by the fire protection profile (10a to 10j) being provided inside a vacuum envelope (22) under exclusion of air.

2. Method according to claim 1, **characterized in that** the fire protection profile (10a to 10j) is released by opening or creating an air inlet (24) in the vacuum envelope (22).

3. Method according to either of the preceding claims, **characterized in that** at least two fire protection profiles (10a to 10j) are used, the fire protection profiles (10a to 10j) differing in length, height and/or width.

4. Method according to claim 3, **characterized in that** the opening (28) is penetrated by at least one line (30, 32, 34, 38a to 38e) and, in a region surrounding the line (30, 32, 34, 38a to 38e), a fire protection profile (10a to 10j) is used that has a greater width than in other regions of the opening (28).

5. Method according to any of the preceding claims, **characterized in that** the fire protection profile (10a to 10j) is converted into the at least partially compressed state by being rolled up.

6. Method according to any of the preceding claims, **characterized in that** at least one line (30, 32, 34, 38a to 38e) penetrating the opening (28) is installed by being pushed between two adjacent layers of the fire protection profile (10a to 10j) or two adjacent fire protection profiles (10a to 10j).

7. Method according to any of the preceding claims, **characterized in that** a line (30, 32, 34, 38a to 38e), which in its installed state penetrates the opening (28), is wrapped by means of the fire protection profile (10a to 10j), in particular the line (30, 32, 34, 38a to 38e) being wrapped by means of the fire protection profile (10a to 10j) before it penetrates the opening (28).

8. Method according to any of the preceding claims, **characterized in that** the fire protection profile (10a to 10j) is only incompletely decompressed as a result of the release, so that in the installed state it can compensate for an expansion movement of the opening (28) by further decompression.

## Revendications

1. Procédé pour la fabrication d'une cloison pare-feu (26) dans un passage (28) d'un bâtiment, dans lequel au moins un profilé de protection contre l'incendie (10a à 10j) est utilisé, lequel comprend un tuyau (12) en un matériau composite (14) qui est rempli d'un matériau de protection contre l'incendie (16), dans lequel le matériau composite (14) présente un matériau fibreux inorganique (20) qui est relié à un film (18), et dans lequel le profilé de protection contre l'incendie (10a à 10j) est réalisé de telle sorte qu'en cas d'incendie, il peut s'agglomérer avec un profilé de protection contre l'incendie (10a à 10j) voisin, comprenant les étapes suivantes :
a) transfert du profilé de protection contre l'incendie (10a à 10j) en un état comprimé au moins dans certaines sections ou mise à disposition du profilé de protection contre l'incendie (10a à 10j) dans un état comprimé au moins dans certaines sections,
b) introduction du profilé de protection contre l'incendie (10a à 10j) dans le passage (28), dans lequel l'état comprimé au moins dans certaines sections est maintenu, et
c) libération subséquente du profilé de protection contre l'incendie (10a à 10j), de sorte qu'il est décomprimé au moins partiellement et au moins dans certaines sections,
**caractérisé en ce que** le profilé de protection contre l'incendie (10a à 10j) est mis à disposition dans un état comprimé au moins dans certaines sections par le fait que le profilé de protection contre l'incendie (10a à 10j) est mis à disposition à l'abri de l'air à l'intérieur d'une enveloppe sous vide (22).

2. Procédé selon la revendication 1, **caractérisé en ce que** le profilé de protection contre l'incendie (10a à 10j) est libéré en ouvrant ou en créant une entrée d'air (24) dans l'enveloppe sous vide (22).

3. Procédé selon l'une des revendications précédentes, **caractérisé en ce qu'**au moins deux profilés de protection contre l'incendie (10a à 10j) sont utilisés, dans lequel les profilés de protection contre l'incendie (10a à 10j) se différencient par leur longueur, leur hauteur et/ou leur largeur.

4. Procédé selon la revendication 3, **caractérisé en ce que** le passage (28) est traversé par au moins une conduite (30, 32, 34, 38a à 38e) et, dans une zone entourant la conduite (30, 32, 34, 38a à 38e), un profilé de protection contre l'incendie (10a à 10j) d'une largeur supérieure à celle dans les autres zones du passage (28) est utilisé.

5. Procédé selon l'une des revendications précédentes, **caractérisé en ce que** le profilé de protection contre l'incendie (10a à 10j) est transféré dans l'état comprimé au moins dans certaines sections en étant enroulé.

6. Procédé selon l'une des revendications précédentes, **caractérisé en ce qu'**au moins une conduite (30, 32, 34, 38a à 38e) traversant le passage (28) est installée en la glissant entre deux couches voisines du profilé de protection contre l'incendie (10a à 10j) ou entre deux profilés de protection contre l'incendie (10a à 10j) voisins.

7. Procédé selon l'une des revendications précédentes, **caractérisé en ce qu'**une conduite (30, 32, 34, 38a à 38e) traversant le passage (28) dans son état installé est enveloppée au moyen du profilé de protection contre l'incendie (10a à 10j), en particulier dans lequel la conduite (30, 32, 34, 38a à 38e) est enveloppée au moyen du profilé de protection contre l'incendie (10a à 10j) avant de traverser le passage (28).

8. Procédé selon l'une des revendications précédentes, **caractérisé en ce que** le profilé de protection contre l'incendie (10a à 10j) est décomprimé uniquement de manière incomplète à la suite de la libération, de sorte qu'à l'état monté, il peut compenser un mouvement d'extension du passage (28) par une décompression supplémentaire.
